# EUROPÄISCHE PATENTSCHRIFT

(11) **EP 1 493 079 B1**
(45) Veröffentlichungstag und Bekanntmachung des Hinweises auf die Patenterteilung: **28.12.2005**
(21) Anmeldenummer: 03718737.4
(22) Anmeldetag: 07.04.2003
(51) Int. Cl.: G06F 9/302, G06F 9/38

(54) **KONFIGURIERBARES RECHENWERK**
CONFIGURABLE ARITHMETIC UNIT
UNITE DE CALCUL CONFIGURABLE

(30) Priorität: 10.04.2002 DE 10215771
(43) Veröffentlichungstag der Anmeldung: 05.01.2005
(73) Patentinhaber: Infineon Technologies AG, 81669 München (DE)
(72) Erfinder: ELBE, Astrid, 81243 München (DE); FISCHER, Wieland, 80469 München (DE); JANSSEN, Norbert, 81667 München (DE); SEDLAK, Holger, 82054 Sauerlach (DE)
(74) Vertreter: Schenk, Markus
(86) Internationale Anmeldenummer: PCT/EP2003/003608
(87) Internationale Veröffentlichungsnummer: WO 2003/085518

(56) Entgegenhaltungen:
- WO-A-01/44928
- WO-A-99/10802
- WO-A-99/44329
- US-A- 6 078 941
- US-B1- 6 219 740

## Beschreibung

Die vorliegende Erfindung bezieht sich auf Rechenwerke und insbesondere auf hinsichtlich ihrer Länge konfigurierbare Langzahlrechenwerke.

Die DE 3631992 T2 offenbart einen Kryptographieprozessor zur effizienten Aufführung des Public-Key-Verfahrens von Rivest, Shamir und Adleman, das auch als RSA-Verfahren bekannt ist. Die in diesem Verfahren erforderliche modulare Exponentiation wird unter Verwendung eines Multiplikations-Vorausschau-Verfahrens und eines Reduktions-Vorausschau-Verfahrens berechnet. Hierzu wird ein Drei-Operanden-Addierer verwendet. Der offenbarte Drei-Operanden-Addierer hat eine Länge von 660 Bits. Eine Elementarzelle besteht aus mehreren Kryptoregistern, einem Schieber, einem Halb-Addierer, einem Voll-Addierer und einem Carry-Look-Ahead-Element. Vier derartige Elementarzellen bilden einen Vier-Zellen-Block, wobei dem Vier-Zellen-Block ein Carry-Look-Ahead-Element zugeordnet ist. Fünf derartige Vier-Zellen-Blöcke bilden einen 20-Zellen-Block. Die Verschlüsselungseinheit besteht insgesamt aus 33 solchen 20-Zellen-Blöcken und einer Steuereinheit, die einen Taktgenerator zum Takten der Elementarzellen umfaßt. Die Carry-Look-Ahead-Elemente der Vier-Zellen-Blöcke sind zusammengeschaltet, um zu erkennen, ob sich ein Carry, d. h. ein Übertrag, über eine größere Distanz, nämlich 20 Bits, ausbreitet. Wenn ein Propagate-Signal des 20-Bit-Blocks aktiv ist, so bedeutet dies, daß der Übertrag der betrachteten 20-Bit-Blocks von einem Übertrag am Ausgang des vorausgehenden Blocks abhängt. Wenn das Propagate-Signal eines 20-Bit-Blocks dagegen nicht aktiv ist, bedeutet dies, daß ein möglicherweise vorhandener Carry am Ausgang dieses Blocks, d. h. am höchstwertigen Bit dieses Blocks, innerhalb dieses Blocks erzeugt worden ist, jedoch nicht durch den vorausgehenden Block beeinflußt ist.

Damit ist es möglich, den Takt des Rechenwerks, d. h. die Rate, mit der neue Eingangsoperanden eingespeist werden, schneller zu machen als den Worst-Case-Fall, bei dem sich der Carrypfad vom niederstwertigen Bit des gesamten Rechenwerks bis zum höchstwertigen Bit des gesamten Rechenwerks erstreckt. Wird ein Propagate-Signal für einen 20-Bit-Block aktiviert, so wird der Takt des gesamten Rechenwerks so verlangsamt, daß der Worst-Case-Fall berücksichtigt wird, d. h. das Rechenwerk wird so lange angehalten, bis sich ein Carry vom niederstwertigen Bit des gesamten Rechenwerks bis zum höchstwertigen Bit des gesamten Rechenwerks ausgebreitet hat.

Die Zykluszeit, d. h. die Zeit, nach der nächste Eingangsoperanden in das Rechenwerk eingespeist werden, wird daher so eingestellt, daß sie gerade ausreicht, um den Übertrag direkt benachbarter Blöcke zu verarbeiten. Dies hat den Vorteil, daß unabhängig von der Anzahl der Stellen des Rechenwerks nur die Zeit eines Block-Übertrags berücksichtigt zu werden braucht. Wenn dagegen festgestellt wird, daß der Übertrag des aktuellen Blocks nicht nur vom vorherigen Block, sondern von dem dem vorherigen Block vorausgehenden Block beeinträchtigt wird, so wird die Zykluszeit so langsam gemacht, daß für einen vollständigen Carry-Pfad ausreichend Zeit vorhanden ist.

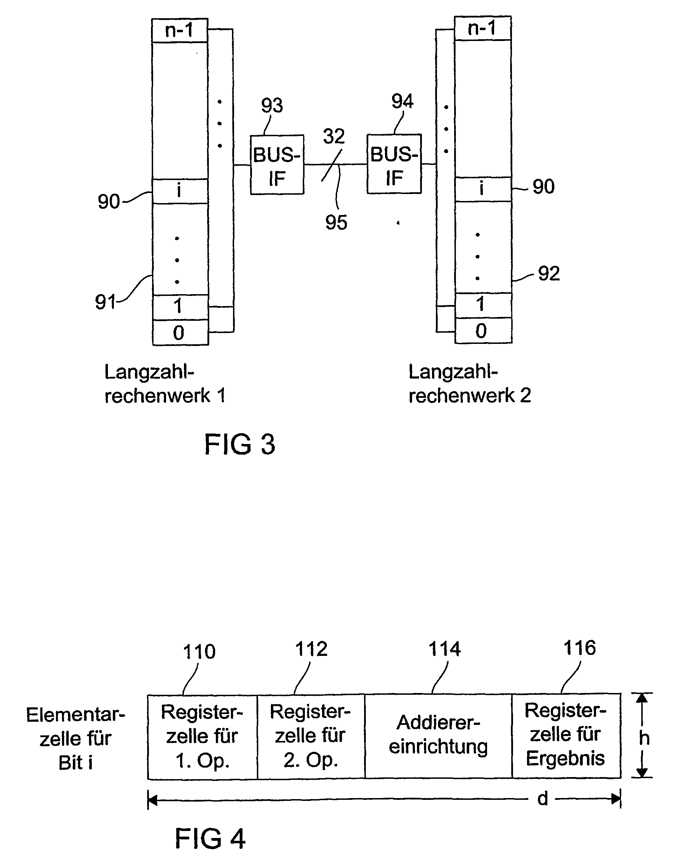

Fig. 4 zeigt eine Elementarzelle für ein Bit i des bekannten Rechenwerks. Die Elementarzelle umfaßt mehrere Register für mehrere Eingangsoperanden, von denen in Fig. 4 lediglich zwei Registerzellen 110, 112 gezeigt sind. Eine Elementarzelle umfaßt ferner eine Addierereinrichtung 114 sowie eine Registerzelle für ein Ergebnis, die in Fig. 4 mit 116 bezeichnet ist. Aus der bereits aus Fig. 4 ersichtlichen relativ hohen Anzahl der Komponenten innerhalb einer Elementarzelle folgt, daß eine solche Elementarzelle in ihrer praktischen Realisierung eine relativ geringe Höhe h, aber eine relativ große Breite d hat. Aufgrund der Tatsache, daß 660 solche Elementarzellen übereinander gestapelt werden müssen, ergibt sich dennoch ein schmaler hoher Turm. Fertigungstechnisch werden jedoch möglichst quadratische Chips angestrebt, so daß der schmale hohe Turm in mehrere kleine Stapel aufgeteilt wird, die nebeneinander plaziert werden, wobei jeder zweite Stapel auf dem Kopf steht. Die Informationen, die ein Stapel von dem vorherigen Stapel benötigt, werden an der Ober- und Unterseite der Stapel zu den Nachbarstapeln übertragen.

Bestimmten kryptographische Algorithmen können mittels zweier parallel arbeitender Rechenwerke parallel abgearbeitet werden, um die Verarbeitungszeit zu reduzieren. Bestimmte Algorithmen haben die Anforderung, wenn sie beispielsweise iterativ sind, daß der Inhalt im Ergebnisregister des einen Rechenwerks in ein Operandenregister des anderen Rechenwerks geladen wird.

Eine solche Situation ist in Fig. 3 dargestellt. In Fig. 3 sind ein erstes Langzahlrechenwerk 91 und ein zweites Langzahlrechenwerk 92 dargestellt. Jedes Rechenwerk umfaßt eine Anzahl von Elementarzellen 90, wobei jede Elementarzelle wie in Fig. 4 gezeigt aufgebaut sein kann. Die Anzahl der Elementarzellen in jedem Langzahlrechenwerk ist gleich und beträgt n. Je nach Anwendungsfall haben Rechenwerke verschiedene Längen. Das in der DE 36 312 992 C2 beschriebene Rechenwerk hat eine Länge von 660 Bit. Wenn zwei solche Verschlüsselungsoperationen parallel ausgeführt werden müßten, würden zwei 660-Bit-Langzahlrechenwerke verwendet werden.

Für die Elliptische-Kurven-Kryptographie wird bereits eine ausreichende Sicherheit erreicht, wenn geheime Schlüssel mit einer Länge von z. B. 160 Bit verwendet werden. Ein solches Rechenwerk müßte daher zumindest 160 Bit breit sein. Für RSA-Kryptosysteme existieren Implementationen mit einem guten Sicherheitsniveau, bei denen der Modul 1024 Stellen hat. Hochsichere RSA-Systeme haben dagegen Module mit 2048 Stellen. Für parallele Anwendungen müßten daher z. B. zwei 1024-Bit-Rechenwerke oder zwei 2048-Bit-Rechenwerke parallel geschaltet werden.

Um den Inhalt in einem Ergebnisregister z. B. des Langzahlrechenwerks 1 (91 in Fig. 3) in ein Eingangsoperandenregister des Langzahlrechenwerks 2 (Bezugszeichen 92 in Fig. 3) zu laden, könnte eine erste Bus-Schnittstelle (Bus-IF; IF = interface), eine zweite Bus-Schnittstelle (Bus-IF) 94 sowie ein beispielsweise 32-Bit-breiter Bus 95 verwendet werden. Die Bus-Schnittstelle 93 würde daher das blockweise Auslesen von 32-Bit-Blöcken aus dem Langzahlrechenwerk 1 umfassen. Jeder 32-Bit-Block wird dann nacheinander zu der Bus-Schnittstelle 94 über den Bus 95 übertragen, wobei die Bus-Schnittstelle 94 veranlaßt, daß der ankommende 32-Bit-Block in die richtigen Elementarzellen des Langzahlrechenwerks geladen wird. Für ein 660-Bit-Rechenwerk sind hierzu über 20 Zyklen nötig, wobei jeder Zyklus aus folgenden Schritten besteht: Adressieren von 32 Elementarzellen im Quellen-Langzahlrechenwerk, Auslesen der 32 Elementarzellen im Quellen-Langzahlrechenwerk, Übertragen der 32 Bit über den Bus, Adressieren der 32 Elementarzellen im Ziel-Langzahlrechenwerk und Einspeichern der 32 Bit in den adressierten 32 Elementarzellen des Langzahlrechenwerks.

Der Zugriff eines Rechenwerks auf ein Register des anderen Rechenwerks erfolgt somit durch vorhergehenden expliziten Austausch von Operanden über das Bussystem, an dem die beiden Rechenwerke hängen. Standardmäßig ist dieser Bus 32 Bit breit. Derselbe kann jedoch auch nur 8 Bit breit sein, je nach vorliegendem System. Der Austausch dauert daher bei Langzahlrechenwerken und insbesondere bei seriell-parallelen Langzahlrechenwerken sehr lang. Außerdem entsteht hier häufig ein Sicherheitsproblem, da der Datentransfer z. B. im Stromprofil sichtbar ist.

Die Aufgabe der vorliegenden Erfindung besteht darin, ein effizienteres und sichereres Rechenwerk zu schaffen.

Diese Aufgabe wird durch ein Rechenwerk nach Patentanspruch 1 gelöst.

Der vorliegenden Erfindung liegt die Erkenntnis zugrunde, daß der Registeraustausch zwischen zwei Langzahlrechenwerken dadurch beschleunigt werden kann, wenn ein erster Rechenwerksblock neben einem zweiten Rechenwerksblock angeordnet wird,
daß ein Abstand zwischen einer Elementarzelle des ersten Rechenwerksblocks und einer gleichwertigen Elementarzelle des zweiten Rechenwerksblocks kleiner ist als ein mittlerer Abstand zwischen derselben Elementarzelle des ersten Rechenwerksblocks und wenigstens zwei ungleichwertigen Elementarzellen des zweiten Rechenwerksblocks. Die Rechenwerksblöcke sind über eine Verbindungseinrichtung mit einer Anzahl von Verbindungsleitungen miteinander verbunden, wobei die Anzahl der Verbindungsleitungen gleich der Anzahl von Elementarzellen in einem Rechenwerksblock ist, wobei eine Verbindungsleitung die zumindest eine Registerzelle in einer Elementarzelle des ersten Rechenwerksblocks mit zumindest einer Registerzelle einer Elementarzelle entsprechend der Wertigkeit im zweiten Rechenwerksblock miteinander verbindet, und wobei ferner eine Steuereinrichtung vorgesehen ist, um den Inhalt der Registerzellen eines Rechenwerksblocks über die Verbindungsleitungen in die Registerzellen des anderen Rechenwerksblocks zu laden.

Ein Vorteil der vorliegenden Erfindung besteht darin, daß ein Registeraustausch zwischen den beiden parallel arbeitenden Rechenwerken schnell vonstatten geht, da hierfür nur ein Zyklus benötigt wird.

Ein weiterer Vorteil der vorliegenden Erfindung besteht darin, daß, da die beiden parallelen Rechenwerke nebeneinander angeordnet sind, so daß Elementarzellen in beiden Rechenwerken mit gleicher Wertigkeit benachbart zueinander angeordnet sind, die Verbindungsleitungen kurz sind und somit z. B. durch Sondenangriffe nur sehr schwer abhörbar sind, da ein Sondenangriff um so leichter stattfinden kann, je ausgedehnter die anzugreifende Leitung ist.

Ein weiterer Vorteil der vorliegenden Erfindung besteht darin, daß das Stromprofil insbesondere bei Langzahlrechenwerken bei der Datenübertragung homogen ist, da eine Vielzahl von voneinander unabhängigen Bits parallel übertragen wird.

Ein weiterer Vorteil der vorliegenden Erfindung besteht darin, daß das Rechenwerk ohne weiteres dahingehend flexibilisiert werden kann, daß die zwei Rechenwerke, die parallel angeordnet sind, dadurch zu einem einzigen Rechenwerk mit doppelter Länge umkonfiguriert werden können, wenn ein Übertrag-Pfad zwischen dem Übertrag-Ausgangssignal des MSB des ersten Rechenwerks mit einem Übertrag-Eingang des LSB des zweiten Rechenwerksblocks freigeschaltet wird. In anderen Worten ausgedrückt bedeutet dies, daß ein sehr langes Langzahlrechenwerk durch Einflußnahme auf den Übertrag-Pfad zwischen zwei Rechenwerksblöcken (oder mehreren Rechenwerksblöcken) ohne weiteres in 2, 4, etc. parallel arbeitende Rechenwerke mit geringerer Länge umkonfiguriert werden kann. Diese Eigenschaft ist insbesondere für einen Vielzweck-Kryptoprozessor von Vorteil, da für bestimmte kryptographische Aufgaben unterschiedliche Rechenwerklängen benötigt werden. In der Elliptische-Kurven-Kryptographie reichen Schlüssellängen in der Größenordnung zwischen 150 und 180 Bit, und zwar vorzugsweise mit 160 Bit, um eine ausreichende Sicherheit zu erzeugen. Dagegen wird bei einem üblichen RSA-Kryptosystem eine ausreichende Sicherheit erst erhalten, wenn Schlüssellängen mit 1024 Bit oder in jüngster Zeit sogar mit 2048 Bit verwendet werden, was unmittelbar dazu führt, daß für eine effiziente Abarbeitung des Kryptosystems Langzahlrechenwerke mit einer Länge von mehr als 1024 bzw. mehr als 2048 Bit erforderlich sind.

Andererseits ist insbesondere bei Kryptoprozessoren, die auf Smart-Cards in Chipform untergebracht werden sollen, die Chipflächenanforderung von außen vorgegeben und eng bemessen. So besteht die Aufgabe, in einen Chip vorgegebener Größe die für den Kryptoprozessor notwendigen Komponenten, wie Rechenwerk und Speicher, etc. unterzubringen. Die Anforderungen an die Chipfläche führen dazu, daß es vorteilhaft ist, nicht für jeden Kryptographiealgorithmus ein unterschiedliches Rechenwerk vorzusehen, sondern daß für möglichst sämtliche Kryptographiealgorithmen dieselben Rechenwerke eingesetzt werden können. Andererseits ist bereits ein wesentliches Unterscheidungskriterium der Kryptographiealgorithmen die unterschiedliche Schlüssellänge und daher die stark unterschiedliche Rechenwerkslänge.

Die erfindungsgemäße Konfigurierbarkeit der Rechenwerklänge durch Vorsehen von Übertrag-Pfaden zwischen zwei Rechenwerksblöcken und durch Bereitstellen einer Konfiguriereinrichtung, um den Rechenwerkpfad durchzuschalten, wenn ein langes Rechenwerk benötigt wird, oder um den Übertragpfad zu unterbrechen, wenn mehrere parallele kurze Rechenwerke benötigt werden, liefern den Vorteil, daß ein Rechenwerk für mehrere Anwendungen eingesetzt werden kann, und daß zusätzlich, wenn kürzere Schlüssellängen vorhanden sind, ein Teil des Rechenwerks nicht einfach abgeschaltet wird, sondern als zweites paralleles Rechenwerk arbeiten kann, das mit dem ersten Rechenwerk einen schnellen Registeraustausch durchführen kann.

Um das erfindungsgemäße Rechenwerk auf einem Chip, d. h. einer integrierten Schaltung, mit einer vorgegebenen Geometrie unterbringen zu können, wird erfindungsgemäß jeder Rechenwerksblock in Teilrechenwerksblöcke zerlegt, wobei die Teilrechenwerksblöcke ineinander verschachtelt angeordnet sind, so daß zwischen zwei Teilrechenwerksblöcken des ersten Rechenwerksblocks immer ein Teilrechenwerksblock des zweiten Rechenwerksblocks angeordnet ist, und wobei ferner die Teilrechenwerksblöcke des ersten und des zweiten Rechenwerksblocks so angeordnet sind, daß Elementarzellen gleicher Wertigkeit einen möglichst geringen Abstand voneinander haben. Dies führt zu einer ineinander verschachtelten doppelten Mäanderstruktur. Die Mäander der beiden parallelen Rechenwerksblöcke sind somit alternierend angeordnet. Nach dem ersten Mäanderturm des einen Rechenwerks folgt der erste Mäanderturm des anderen Rechenwerksblocks, wobei der Letztere geometrisch gespiegelt ist, um die kurzen Abstände zwischen Elementarzellen gleicher Wertigkeit zu erreichen, wenn die beiden Rechenwerksblöcke parallel zueinander betrieben werden. Die ineinander greifende mäanderförmige Anordnung der Rechenwerksblöcke ermöglicht ferner den Fall, bei dem die Rechenwerksblöcke durch Aktivieren des Übertragpfads zu einem Gesamtrechenwerk mit doppelter Länge zusammengeschaltet werden.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaltbild des erfindungsgemäßen Rechenwerks;
- Fig. 2: ein Blockschaltbild einer bevorzugten Anordnung des erfindungsgemäßen Rechenwerks;
- Fig. 3: ein Blockschaltbild zum Durchführen eines Registeraustausches zwischen einem ersten Langzahlrechenwerk und einem zweiten Langzahlrechenwerk mittels eines üblichen Bussystems;
- Fig. 4: eine schematische Darstellung einer Elementarzelle für ein Bit i in einem Langzahlrechenwerk;
- Fig. 5: ein Blockschaltbild einer weiteren bevorzugten Anordnung des erfindungsgemäßen Rechenwerks; und
- Fig. 6: eine Detailansicht zur Erläuterung der Anordnung der zwei Rechenwerksblöcke zueinander.

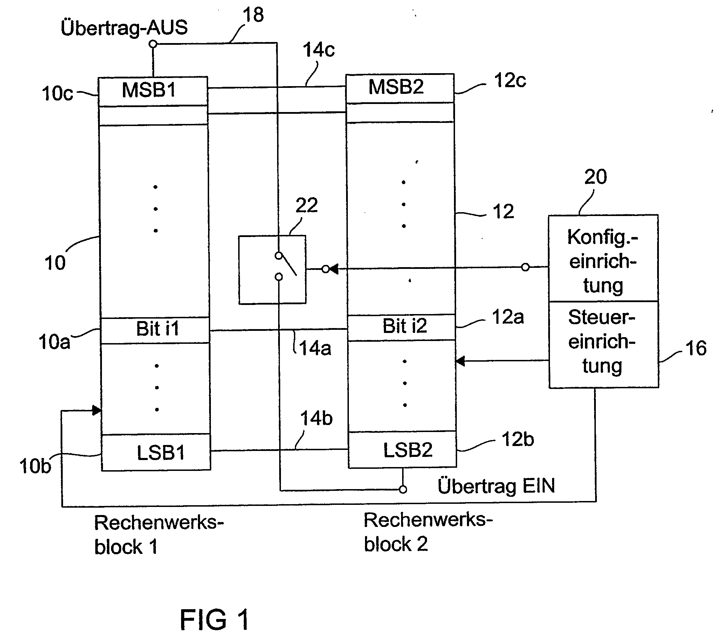

Fig. 1 zeigt ein Blockschaltbild eines bevorzugten Ausführungsbeispiels des erfindungsgemäßen Rechenwerks. Das Rechenwerk umfaßt einen ersten Rechenwerksblock 10 und einen zweiten Rechenwerksblock 12. Jeder Rechenwerksblock selbst umfaßt wiederum eine Mehrzahl von Elementarzellen 10a bzw. 12a, sowie eine Elementarzelle für ein niederstwertiges Bit 10b bzw. 12b sowie eine Elementarzelle für ein höchstwertiges Bit 10c bzw. 12c. Die Elementarzelle 10b für das niederstwertige Bit des Rechenwerks 1 wird auch als LSB1-Elementarzelle bezeichnet. Die Elementarzelle für das höchstwertige Bit des Rechenwerks 1 wird auch als MSB1-Elementarzelle bezeichnet. Analoge Bezeichnungen werden für den zweiten Rechenwerksblock 12 gewählt, wobei der Ausdruck "LSB" für das niederstwertige Bit (LSB = least significant bit) steht, und wobei der Ausdruck MSB für das höchstwertige Bit (most significant bit) steht. Jede in Fig. 1 gezeigte Elementarzelle 10a, 10b, 10c, 12a, 12b, 12c kann grundsätzlich so aufgebaut sein, wie es in Fig. 4 gezeigt ist. Es sei darauf hingewiesen, daß jede Elementarzelle mehr oder weniger Registerzellen für die von der Addierereinrichtung einer Elementarzelle zu verarbeitenden Operanden oder mehr oder weniger Registerzellen für ein bzw. mehrere Ergebnisse umfassen. Um einen schnellen Registeraustausch zwischen den beiden Rechenwerken zu erhalten, muß jedoch jeder Rechenwerksblock über Elementarzellen verfügen, die zumindest eine Registerzelle zum Speichern eines Bits eines von dem Rechenwerksblock zu verarbeitenden Operanden aufweist.

Das in Fig. 1 gezeigte Rechenwerk umfaßt ferner eine Verbindungseinrichtung, die eine Anzahl von Verbindungsleitungen 14a, 14b, 14c hat, wobei jede Verbindungsleitung zwei Elementarzellen gleicher Wertigkeit in den beiden Rechenwerksblöcken miteinander verbindet. So verbindet die Verbindungsleitung 14a die Elementarzelle für das Bit i des ersten Rechenwerksblocks, die in Fig. 1 mit 10a bezeichnet ist, mit einer Elementarzelle für ein Bit i des zweiten Rechenwerksblocks 12, die in Fig. 1 mit 12a bezeichnet ist. Analog dazu verbindet die Verbindungsleitung die LSB-Elementarzelle 10b des ersten Rechenwerksblocks 10 mit der LSB-Elementarzelle 12b des zweiten Rechenwerksblocks. Dasselbe gilt für die Verbindungsleitung 14c, die die beiden MSB-Elementarzellen der beiden Rechenwerksblöcke miteinander verbindet.

Das erfindungsgemäße Rechenwerk umfaßt ferner eine Steuereinrichtung 16 zum Steuern der Rechenwerksblöcke 10, 12, damit ein Inhalt der Registerzellen eines Rechenwerksblocks in den Inhalt der Registerzellen des anderen Rechenwerksblocks über die Verbindungsleitungen 14a, 14b, 14c für jede Elementarzelle direkt geladen werden kann.

Bei dem in Fig. 1 gezeigten bevorzugten Ausführungsbeispiel der vorliegenden Erfindung können die beiden Rechenwerksblöcke 10, 12 entweder als parallele Rechenwerksblöcke gewissermaßen unabhängig voneinander betrieben werden. Alternativ können die beiden Rechenwerksblöcke 10 und 12 so zusammengeschaltet werden, daß sie als ein einziges Gesamtrechenwerk mit einer Breite betrieben werden, die gleich der Anzahl der Elementarzellen in dem ersten Rechenwerksblock 10 plus der Anzahl von Elementarzellen in dem zweiten Rechenwerksblock 12 sind. Dies wird dadurch erreicht, daß eine Übertragleitung 18 vorgesehen ist, die einen Übertrag-Ausgang der MSB-Elementarzelle des ersten Rechenwerksblocks mit einem Übertrag-Eingang der LSB-Elementarzelle des zweiten Rechenwerksblocks verbindet. Diese Funktionalität wird ferner durch eine Konfigurationseinrichtung 20 erreicht, die einen Schalter 22 steuert, um entweder die beiden Rechenwerksblöcke als zwei parallele Rechenwerke zu betreiben, wenn der Schalter geöffnet ist, oder die beiden Rechenwerksblöcke als einziges Gesamtrechenwerk zu betreiben, wenn der Schalter 22 geschlossen ist. Die Operandenbits, die in den Elementarzellen des ersten Rechenwerksblocks 10 gespeichert sind, stellen in diesem Fall niederwertige Bits eines Gesamtoperanden dar, während die Operandenbits, die in den Elementarzellen des zweiten Rechenwerksblocks 12 gespeichert sind, höherwertige Bits des Gesamtoperanden darstellen.

Je nach Bauform und Anzahl der Elementarzellen in einem Rechenwerksblock und je nach Geometrievorgabe für die integrierte Schaltung, mit der das in Fig. 1 gezeigte Rechenwerk zu realisieren ist, kann die in Fig. 1 gezeigte räumliche Anordnung bereits ausreichend sein. Dies wird der Fall sein, wenn für einen Prozessor die Geometrievorgabe dahingehend lautet, daß ein Rechenwerk mit relativ geringer Breite gefordert ist, wenn also ein stark rechteckiger Chip benötigt wird.

Üblicherweise besteht die Anforderung jedoch dahingehend, daß möglichst quadratische Chips erwünscht sind.

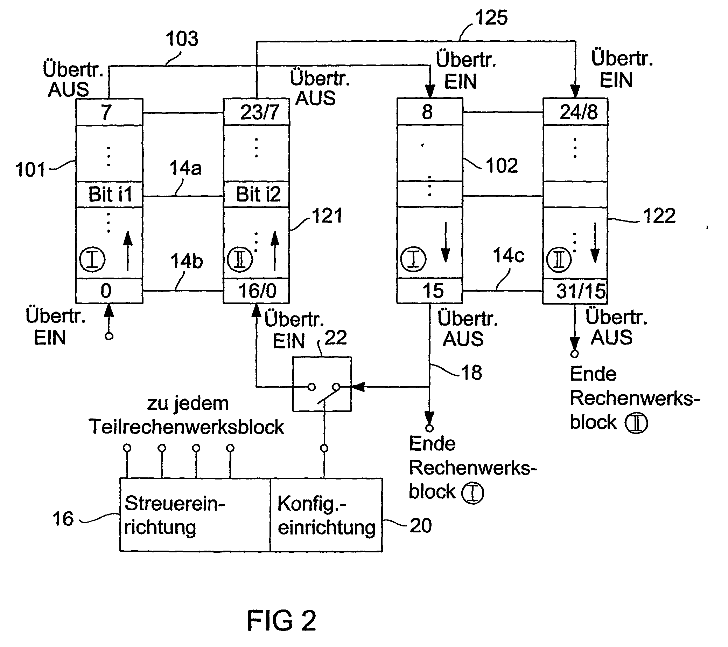

Zu diesem Zweck wird zu der in Fig. 2 gezeigten bevorzugten doppelten Mäanderstruktur übergegangen. Jeder Rechenwerksblock wird in zumindest zwei Teilrechenwerksblöcke zerlegt. Bei dem in Fig. 2 gezeigten Ausführungsbeispiel wird der Übersichtlichkeit halber angenommen, daß der erste Rechenwerksblock 16 Elementarzellen umfaßt, und daß auch der zweite Rechenwerksblock 16 Elementarzellen umfaßt, und daß jeder Rechenwerksblock in zwei Teilrechenwerksblöcke mit jeweils 8 Elementarzellen zerlegt wird. Es sei jedoch darauf hingewiesen, daß typische Größen für Vielzweck-Kryptographierechenwerke pro Teilrechenwerk mehr als 1024 Elementarzellen erfordern.

Das erste Teilrechenwerk 10 wird in einen ersten Teilrechenwerksblock 101 und in einen zweiten Teilrechenwerksblock 102 zerlegt. Analog dazu wird das zweite Rechenwerk in einen ersten Teilrechenwerksblock 121 und in einen zweiten Teilrechenwerksblock 122 zerlegt. Der erste Teilrechenwerksblock 101 und der zweite Teilrechenwerksblock 102 des ersten Rechenwerksblocks sind über einen Teilrechenwerksblock-Übertragpfad 103 miteinander verbunden. Analog dazu ist der erste Teilrechenwerksblock 121 des zweiten Rechenwerksblocks über eine Teilrechenwerk-Übertragverbindung 123 mit dem zweiten Teilrechenwerksblock 122 des zweiten Rechenwerksblocks (12 in Fig. 1) verbunden. Die Zugehörigkeit der einzelnen Teilrechenwerksblöcke zu den in Fig. 1 gezeigten Rechenwerksblöcken ist auch durch die in Fig. 2 eingezeichneten römischen Ziffern deutlich gemacht.

Um die kurzen Verbindungsleitungen bei der mäanderförmigen Struktur sicherzustellen, sind die beiden Rechenwerksblöcke als ineinandergreifende Mäanderstruktur angeordnet, wie es in Fig. 2 gezeigt ist. So ist die LSB-Elementarzelle des ersten Rechenwerksblocks über die Verbindungsleitung 14b mit der LSB-Elementarzelle des zweiten Rechenwerksblocks verbunden. Dasselbe trifft für die Elementarzelle für das Bit i des ersten Rechenwerksblocks und die Elementarzelle für das Bit i des zweiten Rechenwerksblocks zu, welche über die Verbindungsleitung 14a miteinander verbunden sind. Schließlich sind auch die MSB-Elementarzelle des ersten Rechenwerksblocks und die MSB-Elementarzelle des zweiten Rechenwerksblocks über die Verbindungsleitung 14c miteinander verbunden. Bei dem gewählten Ausführungsbeispiel ist die Wertigkeit in die entsprechende Elementarzelle eingezeichnet. Die Wertigkeit der Elementarzellen des ersten Rechenwerksblocks erstreckt sich von 0 (LSB-Elementarzelle) bis 15 (MSB-Elementarzelle). Die Wertigkeit des zweiten Rechenwerks erstreckt sich von 16 (LSB-Elementarzelle) bis zu 32 (MSB-Elementarzelle), wobei diese Wertigkeitsangaben für den Fall gelten, daß der erste und der zweite Rechenwerksblock über die Übertragleitung 18 und den Schalter 22 miteinander verschaltet sind, wobei der Schalter 22 von der Konfiguriereinrichtung 20 in geschlossenem Zustand gehalten wird.

Für den Fall, daß beide Rechenwerksblöcke parallel arbeiten, ändert sich für die Wertigkeiten der Elementarzellen des ersten Rechenwerksblocks nichts. Die Wertigkeiten des zweiten Rechenwerksblocks erstrecken sich jedoch dann, wie es in Fig. 2 gezeigt ist, von 0 bis 15.

Die Steuereinrichtung 16 hat dann, wie es ebenfalls in Fig. 2 gezeigt ist, eine Steuerverbindung zu jedem Teilrechenwerksblock, um einen Registeraustausch zwischen Elementarzellen des ersten Teilrechenwerksblocks und des zweiten Teilrechenwerksblocks über die Verbindungsleitungen 14a, 14b, 14c zu ermöglichen.

Die in Fig. 2 gezeigte ineinander eingreifende Mäanderstruktur der beiden Rechenwerksblöcke und insbesondere der einzelnen Teilrechenwerksblöcke stellt allgemein sicher, daß die Verbindungsleitungen zwischen entsprechenden Elementarzellen gleicher Wertigkeit so kurz als möglich sind. In dieser Hinsicht ist auch eine parallele Anordnung der Teilrechenwerksblöcke vorteilhaft, da dann sämtliche Verbindungsleitungen zwischen den einzelnen Elementarzellen gleicher Wertigkeit in den beiden benachbarten Teilrechenwerksblöcken gleich lang sind und insgesamt gesehen so kurz als möglich sind.

Es sei darauf hingewiesen, daß in der Praxis die doppelte Mäanderstruktur aus mehr Teilrechenwerksblöcken besteht als es in Fig. 2 gezeigt ist. Insbesondere werden in der Praxis die einzelnen Teilrechenwerksblöcke auch eine im Vergleich zur Breite deutlich größere Höhe umfassen. In diesem Fall wird es, um eine annähernd z. B. quadratische Chipform zu erreichen, bevorzugt, jeden Rechenwerksblock in mehr als zwei Teilrechenwerksblöcke zu unterteilen und gemäß der in Fig. 2 gezeigten Struktur der ineinander greifenden Finger anzuordnen.

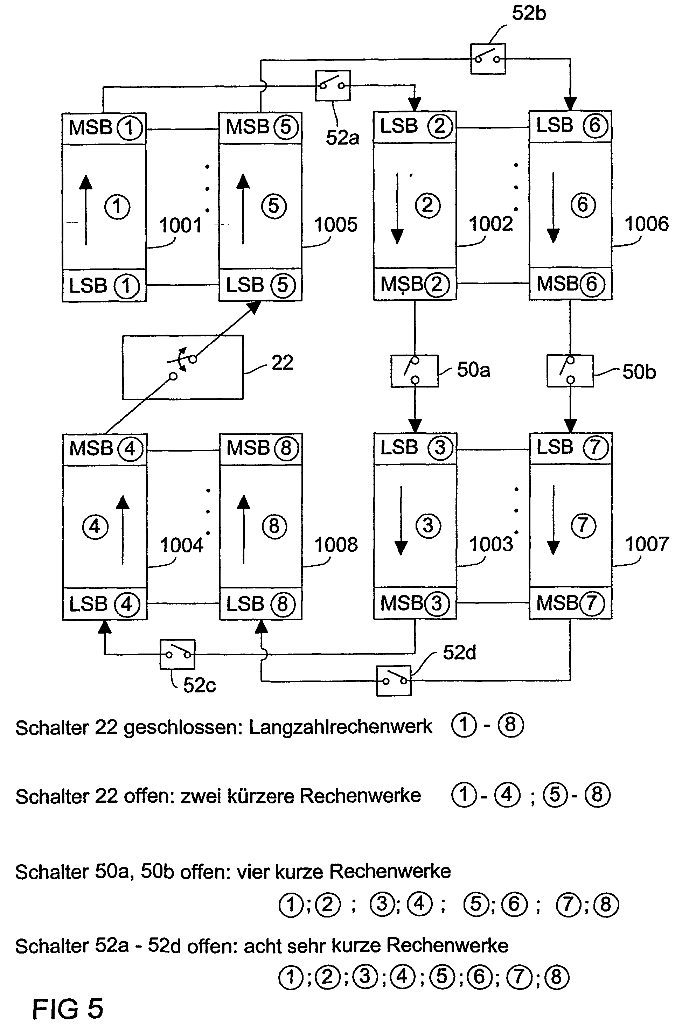

Fig. 5 zeigt eine weitere bevorzugte Anordnung des erfindungsgemäßen Rechenwerks, das durch Spiegelung des in Fig. 2 gezeigten Rechenwerks gemäß einem ersten Ausführungsbeispiel der vorliegenden Erfindung um eine horizontale Achse entsteht. Im einzelnen umfaßt das in Fig. 5 gezeigte Rechenwerk zwei Rechenwerksblöcke, wobei sich der erste Rechenwerksblock aus den Teilrechenwerksblöcken 1001, 1002, 1003 und 1004 zusammensetzt, während sich der zweite Rechenwerksblock aus den Teilrechenwerksblöcken 1005, 1006, 1007 und 1008 zusammensetzt. Wie es in Fig. 5 gezeigt ist, ist immer das MSB eines Rechenwerks mit einer niedrigeren Ordnungszahl 1 bis 7 mit dem LSB eines Rechenwerks einer um eins höheren Ordnungszahl verbunden. Die einzelnen Teilrechenwerksblöcke sind durch in Fig. 5 dargestellte Verbindungsleitungen verbunden, um den Übertragweg darzustellen, der von einem Teilrechenwerksblock zum nächsten verdrahtet sein soll. In den einzelnen Teilrechenwerksblöcken 1001 bis 1008 ist durch einen Pfeil die Richtung vom LSB zum MSB des entsprechenden Teilrechenwerksblocks dargestellt.

In Fig. 5 ist ferner eine Schalteinrichtung 22 dargestellt, die dieselbe Funktion wie die Schalteinrichtung 22 von Fig. 2 hat. Ist der Schalter geschlossen, so fungiert das in Fig. 5 gezeigte Rechenwerk als ein einziges Langzahlrechenwerk mit einer Anzahl von 8 x m Bits, wobei m die Anzahl von Bits eines Teilrechenwerksblocks 1001 bis 1007 von Fig. 5 ist.

Ist der Schalter 22 dagegen offen, so fungiert die Anordnung in Fig. 5 als zwei parallele entsprechend kürzere Rechenwerke. Insbesondere hat der erste Rechenwerksblock dann die Teilrechenwerksblöcke 1 bis 4, während der zweite Rechenwerksblock dann die Teilrechenwerksblöcke 5 bis 8 aufweist. Aus Fig. 5 ist ferner zu sehen, daß dann die Bits gleicher Ordnung in den beiden kürzeren Rechenwerken nahe aneinander angeordnet sind, und zwar derart, daß der räumliche Abstand zwischen einer Elementarzelle des ersten Rechenwerksblocks und einer gleichwertigen Elementarzelle des zweiten Rechenwerksblocks kleiner ist als ein mittlerer Abstand zwischen der Elementarzelle des ersten Rechenwerksblocks und zumindest zwei ungleichwertigen Elementarzellen des zweiten Rechenwerksblocks.

Es sei darauf hingewiesen, daß sich der mittlere Abstand dadurch berechnen läßt, daß alle bezüglich einer Elementarzelle des anderen Rechenwerksblocks ungleichwertigen Elementarzellen eines Rechenwerksblock mit der einen Elementarzelle des zweiten Rechenwerksblocks miteinander verbunden werden, daß dann der Abstand jeder einzelnen Verbindung aufsummiert wird, und daß dann der Mittelwert, beispielsweise durch Teilen der sich ergebenden Länge durch die Anzahl der aufsummierten Verbindungen, berechnet werden kann. Zur Berechnung des mittleren Abstands muß jedoch nicht jegliche mögliche Verbindung zwischen den beiden Rechenwerksblöcken aufsummiert und der Mittelwert daraus gebildet werden. Statt dessen genügt es auch, einige wenige Verbindungen (z. B. 2) ungleichwertiger Elementarzellen abzumessen und daraus den mittleren Abstand zu berechnen. Jedenfalls ist die Anordnung so, daß die Übertragungswege zwischen gleichwertigen Elementarzellen kurz sind, damit ein schneller Registeraustausch von einem Rechenwerksblock zum anderen Rechenwerksblock möglich ist, und zwar über die Elementarzelle-zu Elementarzelle-Verbindungen, durch die jede Elementarzelle des einen Rechenwerksblocks mit der entsprechenden anderen Elementarzelle des anderen Rechenwerksblocks gleicher Ordnung verbunden ist.

Es sei darauf hingewiesen, daß die einzelnen Teilrechenwerksblöcke nicht unbedingt genau parallel zueinander angeordnet werden müssen, bzw. nicht unbedingt so, daß der Abstand zwischen zwei Elementarzellen gleicher Ordnung immer kleiner ist als der räumliche Abstand zwischen einer Elementarzelle des ersten Rechenwerksblocks und einer Elementarzelle einer um eins höheren Ordnung des zweiten Rechenwerksblocks. Wenn nämlich beispielsweise der Teilrechenwerksblock 5 in vertikaler Richtung um die Länge einer halben, ganzen oder von mehreren Elementarzelle verschoben wird, so wird der erfindungsgemäße Effekt immer noch erreicht, obgleich der Abstand zwischen zwei gleichwertigen Elementarzellen in den Teilrechenwerksblöcken 1001 und 1005 genauso groß ist wie der Abstand einer Elementarzelle eines Teilrechenwerksblocks zur Elementarzelle nächsthöherer oder nächstniedrigerer Ordnung des anderen Teilrechenwerksblocks.

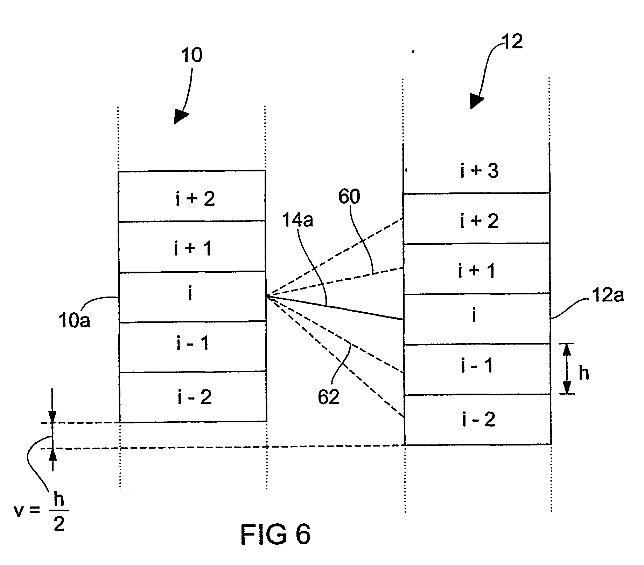

Zur Erläuterung dieses Sachverhalts wird nachfolgend auf Fig. 6 Bezug genommen. Fig. 6 zeigt einen vergrößerten Ausschnitt aus Fig. 1. Links in Fig. 6 ist der erste Rechenwerksblock 10 gezeigt, und zwar insbesondere die Elementarzellen der Ordnung i+2, i+1, i, i-1, i-2. Rechts in Fig. 6 ist der zweite Rechenwerksblock gezeigt, und zwar ebenfalls mit den Elementarzellen i+3, i+2, i+1, i, i-1, i-2. Es sei ferner angenommen, daß die Höhe jeder Elementarzelle in beiden Rechenwerksblöcken gleich ist. Die Höhe jeder Elementarzelle ist in Fig. 6 mit h bezeichnet. Darüber hinaus sind die beiden Rechenwerksblöcke nicht mehr wie in Fig. 1 exakt auf gleicher Höhe angeordnet, sondern um h/2 zueinander versetzt. Es sei darauf hingewiesen, daß auch andere Versetzungswerte möglich sind, wobei jedoch die kürzesten Verbindungen zwischen den Elementarzellen gleicher Ordnung erreicht werden, wenn der Versatz v zwischen den beiden Rechenwerksblöcken gleich 0 ist.

Die Verbindungsleitung 14a zwischen den beiden Elementarzellen gleicher Ordnung in den beiden Rechenwerksblöcken ist in Fig. 6 durchgezogen eingezeichnet. Erfindungsgemäß sind die beiden Rechenwerksblöcke so angeordnet, daß die Länge der Verbindungsleitung 14a kürzer ist als der mittlere Abstand zwischen der Elementarzelle i des ersten Rechenwerksblocks und zumindest zwei Elementarzellen unterschiedlicher Ordnung, also z.B. den Elementarzellen der Ordnung i+1 und i-1, bzw. i+1 und i+2 des zweiten Rechenwerksblocks 2. Der Abstand der Elementarzelle 10a zu der Elementarzelle nächsthöherer Ordnung im Rechenwerksblock 12, also zu der Elementarzelle i+1 ist in Fig. 6 mit 60 bezeichnet. Aus Fig. 6 ist zu ersehen, daß dieser Abstand gleich groß ist wie die Länge der Verbindungsleitung 14a. Aus Fig. 6 ist jedoch ferner zu sehen, daß der Abstand zwischen der Elementarzelle 10a des ersten Rechenwerksblocks und z.B. der Elementarzelle mit der Ordnung i-1, der in Fig. 6 mit 62 bezeichnet ist bereits größer ist als der Abstand 60. Wird nun z.B. das arithmetische Mittel der beiden Abstände 60 und 62 errechnet, so ergibt sich, daß dieses arithmetische Mittel größer ist als die Länge der Verbindungsleitung 14a.

Es sei darauf hingewiesen, daß es für die vorliegende Erfindung nicht von Bedeutung ist, ob die beiden Rechenwerksblöcke rechteckige Stapel sind, die zueinander parallel angeordnet sind. Die Rechenwerksblöcke können statt dessen auch rechteckige Stapel sein, die in einem Winkel zueinander angeordnet sind. Alternativ können die Rechenwerksblöcke auch Kreissegmente sein, und die einzelnen Elementarzellen können kreissektorförmig gestaltet sein, d.h. sie müssen nicht unbedingt eine genau rechteckige Form haben. Darüber hinaus müssen die einzelnen Abmessungen der Elementarzellen nicht unbedingt gleich groß sein, obgleich dies im Sinne eines einfacheren Schaltungsdesigns und eines einfacheren Routings bevorzugt wird.

Jegliches erfindungsgemäße Rechenwerk hat jedoch den Vorteil, daß Elementarzellen gleicher Ordnung so zueinander angeordnet sind, daß kurze Verbindungsleitungen eingesetzt werden können, um einen schnellen vollständig parallelen Datenaustausch zwischen Registern der Elementarzellen der beiden Rechenwerksblöcke erreichen zu können, wenn die beiden Rechenwerksblöcke als voneinander getrennte Rechenwerke arbeiten.

Es sei ferner darauf hingewiesen, daß die in Fig. 5 gezeigte Rechenwerksanordnung auch derart betrieben werden kann, daß vier Einzelrechenwerke parallel laufen. Dies wird dadurch erreicht, daß weitere Schalter 50a, 50b zwischen den Teilrechenwerksblöcken 1002 und 1003 bzw. den Teilrechenwerksblöcken 1006 und 1007 eingebaut werden. In diesem Fall liegen vier voneinander unabhängige wieder kürzere Rechenwerke vor, nämlich das erste Rechenwerk, das sich aus den Teilrechenwerksblöcken 1 und 2 ergibt, das zweite Rechenwerk, das sich aus den Teilrechenwerksblöcken 5 und 6 ergibt, das dritte Rechenwerk, das sich aus den Teilrechenwerksblöcken 3 und 4 ergibt, und das vierte Teilrechenwerk, das sich aus den Teilrechenwerksblöcken 1007 und 1008 ergibt.

Aus Fig. 5 ist zu ersehen, daß auch die vier Rechenwerke so zueinander angeordnet sind, daß ein schneller Registeraustausch zwischen jeweils zwei einzelnen Rechenwerken möglich ist.

Werden ferner, wie es in Fig. 5 gezeigt ist, Schalter 52a bis 52d in die entsprechenden Übertragleitungen eingebaut, so kann die in Fig. 5 gezeigte Rechenwerksanordnung auch ohne weiteres als 8 voneinander getrennte Rechenwerke eingesetzt werden, wobei jedes Rechenwerk eine Anzahl von Elementarzellen hat, die gleich der Anzahl von Elementarzellen in einem Teilrechenwerksblock 1001 bis 1007 ist.

Aus Fig. 5 ist zu sehen, daß das erfindungsgemäße Rechenwerk in Mäanderstruktur optimal skalierbar ist. Es kann als ein Langzahlrechenwerk fungieren, durch Öffnen des Schalters 22 kann es ferner als zwei kurze Rechenwerke agieren. Durch Öffnen der Schalter 50a, 50b, wobei der Schalter 22 ebenfalls offen ist, kann das Rechenwerk als vier kurze Rechenwerke fungieren, wobei ferner durch Öffnung der Schalter 52a bis 52d acht Einzelrechenwerke erhalten werden können, wodurch immer zwischen zwei benachbarten Rechenwerken ein schneller Datenaustausch durch die Verbindungsleitungen möglich ist.

### Bezugszeichenliste

- 10: erster Rechenwerksblock
- 10a: Elementarzelle i
- 10b: LSB1-Elementarzelle
- 10c: MSB1-Elementarzelle
- 12: zweiter Rechenwerksblock
- 12a: Elementarzelle i
- 12b: LSB1-Elementarzelle
- 12c: MSB1-Elementarzelle
- 14a: Bit-Verbindungsleitung
- 14b: Bit-Verbindungsleitung
- 14c: Bit-Verbindungsleitung
- 16: Steuereinrichtung
- 18: Übertragleitung
- 20: Konfigurationseinrichtung
- 22: Übertrag-Durchschalteinrichtung
- 50a - 50b: Konfigurationsschalter
- 52a - 52d: Konfigurationsschalter
- 60, 62: Abstand zwischen ungleichwertigen Elementarzellen
- 90: Elementarzelle
- 91: erstes Langzahlrechenwerk
- 92: zweites Langzahlrechenwerk
- 93: Bus-Schnittstelle
- 94: Bus-Schnittstelle
- 101: erster Teilrechenwerksblock des ersten Rechenwerksblocks
- 102: zweiter Teilrechenwerksblock des ersten Rechenwerksblocks
- 110: Registerzelle für ersten Operanden
- 112: Registerzelle für zweiten Operanden
- 114: Addierereinrichtung
- 116: Registerzelle für Ergebnis
- 121: erster Teilrechenwerksblock des zweiten Rechenwerksblocks
- 122: zweiter Teilrechenwerksblock des zweiten Rechenwerksblocks
- 1001 - 1008: Teilrechenwerksblöcke

## Patentansprüche

1. Rechenwerk mit folgenden Merkmalen:
einem ersten Rechenwerksblock (10), der eine erste Mehrzahl von Elementarzellen (10a, 10b, 10c) aufweist, die eine LSB-Elementarzelle (10b) für ein niederstwertiges Bit eines ersten Operanden und eine MSB-Elementarzelle (10c) für ein höchstwertiges Bit des ersten Operanden umfaßt, wobei jede Elementarzelle des ersten Rechenwerksblocks zumindest eine Registerzelle zum Speichern eines Bits des ersten Operanden oder eines durch die Elementarzelle berechneten Ergebnisbits aufweist, wobei der erste Rechenwerksblock zumindest vier Teilrechenwerksblöcke (1001, 1002, 1003, 1004) aufweist;
einem zweiten Rechenwerksblock (12), der eine zweite Mehrzahl von Elementarzellen (12a, 12b, 12c) aufweist, die eine LSB-Elementarzelle (12b) für ein niederstwertiges Bit eines zweiten Operanden und eine MSB-Elementarzelle (12c) für ein höchstwertiges Bit des zweiten Operanden umfaßt, wobei jede Elementarzelle des zweiten Rechenwerksblocks (12) eine Registerzelle zum Speichern eines Bits des zweiten Operanden oder eines durch die Elementarzelle berechneten Ergebnisbits aufweist, wobei der zweite Rechenwerksblock zumindest vier Teilrechenwerksblöcke (1005, 1006, 1007, 1008) aufweist
wobei der erste und der zweite Rechenwerksblock (10, 12) räumlich zueinander so angeordnet sind, daß ein räumlicher Abstand zwischen einer Elementarzelle (10a) des ersten Rechenwerksblocks (10) und einer gleichwertigen Elementarzelle (12a) des zweiten Rechenwerksblocks kleiner ist als ein mittlerer Abstand zwischen der Elementarzelle (10a) des ersten Rechenwerksblocks (10) und ungleichwertigen Elementarzellen (12b, 12c) des zweiten Rechenwerksblocks (12),
wobei ein Teilrechenwerksblock (1005) des zweiten Rechenwerksblocks zwischen zwei Teilrechenwerksblöcken (1001, 1002) des ersten Rechenwerksblocks angeordnet ist, und wobei eine Richtung von einem niederstwertigen Bit zu einem höchstwertigen Bit des Teilrechenwerksblocks (1005) des zweiten Rechenwerksblocks die gleiche Richtung von einer niederstwertigen Elementarzelle zu einer höchstwertigen Elementarzelle eines benachbarten Teilrechenwerksblocks (1001) des ersten Rechenwerksblocks ist,
wobei eine Richtung von einer niederstwertigen Elementarzelle zu einer höchstwertigen Elementarzelle des Teilrechenwerksblocks (1005) des zweiten Rechenwerksblocks entgegengesetzt zu einer Richtung von einer niederstwertigen Elementarzelle zu einer höchstwertigen Elementarzelle des anderen benachbarten Teilrechenwerksblocks (1002) des ersten Rechenwerks ist,
einer Verbindungseinrichtung mit einer Anzahl von Verbindungsleitungen (14a, 14b, 14c), die gleich der Anzahl von Elementarzellen in einem Rechenwerksblock (10, 12) ist, wobei eine Verbindungsleitung die zumindest eine Registerzelle einer Elementarzelle einer Wertigkeit des ersten Rechenwerksblocks (10) mit einer Registerzelle einer Elementarzelle der selben Wertigkeit des zweiten Rechenwerksblocks (12) verbinden, wobei die Verbindungsleitungen zwischen den beiden Teilrechenwerksblöcken (1001, 1005) angeordnet sind, die die gleiche Richtung von einer niederstwertigen Elementarzelle zu einer höchstwertigen Elementarzelle der Teilrechenwerksblöcke (1001, 1005) aufweisen; und
einer Steuereinrichtung (16) zum Laden eines Inhalts der Registerzellen eines Rechenwerksblocks (10) über die Anzahl von Verbindungsleitungen (14a, 14b, 14c) in die Registerzellen des anderen Rechenwerksblocks (12).

2. Rechenwerk nach Anspruch 1, das ferner folgende Merkmale aufweist:
eine schaltbare Übertragleitung (18) zum Verbinden eines Übertrag-Ausgangs der MSB-Elementarzelle (10c) des ersten Rechenwerksblocks (10) mit einem Übertrageingang der LSB-Elementarzelle (12b) des zweiten Rechenwerksblocks; und
einer Konfigurationseinrichtung (20) zum Durchschalten der schaltbaren Übertragleitung (18), um den ersten und den zweiten Rechenwerksblock (10, 12) als eine einzige Recheneinrichtung zu konfigurieren, so daß der erste Operand und der zweite Operand als ein Gesamtoperand behandelbar sind, wobei der erste Rechenwerksblock für niederwertige Stellen des Gesamtoperanden vorgesehen ist, und wobei der zweite Rechenwerksblock für höherwertige Stellen des Gesamtoperanden vorgesehen ist.

3. Rechenwerk nach Anspruch 1 oder 2,
bei dem der erste Rechenwerksblock (10) in zumindest zwei Teilrechenwerksblöcke (101, 102) aufgeteilt ist, die räumlich beabstandet angeordnet sind, wobei ein Übertrag-Ausgang einer MSB-Elementarzelle des ersten Teilrechenwerksblocks (121) mit einem Übertrag-Eingang einer LSB-Elementarzelle des zweiten Teilrechenwerksblocks (122) verbunden ist,
bei dem der zweite Rechenwerksblock in zwei Teilrechenwerksblöcke (121, 122) aufgeteilt ist, die räumlich beabstandet angeordnet sind, wobei ein Übertrag-Ausgang einer MSB-Elementarzelle des ersten Teilrechenwerksblocks (121) mit einem Übertrag-Eingang einer LSB-Elementarzelle (122) des zweiten Teilrechenwerksblocks (122) verbunden ist,
wobei der erste Teilrechenwerksblock (101) des ersten Rechenwerksblocks (10) benachbart zu dem ersten Teilrechenwerksblock (121) des zweiten Rechenwerksblocks (12) angeordnet ist, und
wobei der zweite Teilrechenwerksblock (102) des ersten Rechenwerksblocks (10) benachbart zu dem zweiten Teilrechenwerksblock (122) des zweiten Rechenwerksblocks (12) angeordnet ist.

4. Rechenwerk nach Anspruch 3,
bei dem eine LSB-Elementarzelle des ersten Teilrechenwerksblocks (101) des ersten Rechenwerksblocks (10) räumlich benachbart zu einer LSB-Elementarzelle des ersten Teilrechenwerksblocks (121) des zweiten Rechenwerksblocks (12) angeordnet ist,
bei dem eine MSB-Elementarzelle des ersten Teilrechenwerksblocks (101) des ersten Teilrechenwerks räumlich benachbart zu einer MSB-Elementarzelle des ersten Teilrechenwerksblocks des zweiten Rechenwerksblocks (12) angeordnet ist,
bei dem eine LSB-Elementarzelle des zweiten Teilrechenwerksblocks (102) des ersten Teilrechenwerks räumlich benachbart zu einer LSB-Elementarzelle des zweiten Teilrechenwerksblocks (122) des zweiten Rechenwerksblocks (12) angeordnet ist, und
bei dem eine MSB-Elementarzelle des zweiten Teilrechenwerksblocks (102) des ersten Rechenwerksblocks (10) räumlich benachbart zu einer MSB-Elementarzelle des zweiten Teilrechenwerksblocks (122) des zweiten Rechenwerksblocks (12) angeordnet ist.

5. Rechenwerk nach Anspruch 3 oder 4,
bei dem die Anzahl von Elementarzellen in jedem Teilrechenwerksblock des ersten und zweiten Rechenwerksblocks gleich ist.

6. Rechenwerk nach einem der Ansprüche 2 bis 5,
bei dem jeder Teilrechenwerksblock eine geometrisch laterale und geometrisch vertikale Dimension hat,
bei dem jeder Teilrechenwerksblock im wesentlichen parallel zu anderen Teilrechenwerksblöcken angeordnet ist, so daß sich eine Anordnung ergibt, in der abwechselnd ein Teilrechenwerksblock des ersten Rechenwerksblocks und ein Teilrechenwerksblock des zweiten Rechenwerksblocks angeordnet sind.

7. Rechenwerk nach einem der Ansprüche 1 bis 6,
bei dem jede Elementarzelle zumindest zwei Eingangsoperandenregisterzellen und eine Ergebnisregisterzelle aufweist,
bei dem jede Elementarzelle ausgebildet ist, um einen Inhalt der Ergebnisregisterzelle in eine Eingangsoperandenregisterzelle derselben Elementarzelle zu laden.

8. Rechenwerk nach einem der Ansprüche 1 bis 7,
bei dem jede Elementarzelle zumindest zwei Eingangsoperandenregisterzellen und eine Ergebnisregisterzelle aufweist,
bei dem die Steuerungseinrichtung (16) angeordnet ist, um einen Inhalt einer Ergebnisregisterzelle des ersten Rechenwerksblocks in eine Eingangsoperandenregisterzelle des zweiten Rechenwerksblocks über eine den Elementarzellen gleicher Wertigkeit zugeordnete Verbindungsleitung (14a) zu laden, und
bei dem die Steuerungseinrichtung angeordnet ist, um einen Inhalt einer Ergebnisregisterzelle des zweiten Rechenwerksblocks in eine Eingangsoperandenregisterzelle des ersten Rechenwerksblocks über eine den Elementarzellen gleicher Wertigkeit zugeordnete Verbindungsleitung (14a) zu laden.

9. Rechenwerk nach einem der Ansprüche 1 bis 8, das als Langzahlrechenwerk ausgebildet ist.

10. Rechenwerk nach Anspruch 9, bei dem der erste Rechenwerksblock mehr als 160 Elementarzellen aufweist, und bei dem der zweite Rechenwerksblock ebenfalls mehr als 160 Elementarzellen aufweist.

11. Rechenwerk nach Anspruch 1,
bei dem zwischen einem Teilrechenwerksblock (1004) des ersten Rechenwerksblocks und einem Teilrechenwerksblock (1005) des zweiten Rechenwerksblocks ein Konfigurationsschalter (22) angeordnet ist, der in geöffneter Stellung den ersten und den zweiten Rechenwerksblock zu voneinander unabhängigen Rechenwerkseinheiten konfiguriert.

12. Rechenwerk nach einem der Ansprüche 1 oder 11,
bei dem weitere Schalter (50a, 50b) zwischen jeweils zwei Teilrechenwerksblöcken (1002, 1003; 1006, 1007) eines Rechenwerksblocks vorhanden sind, wobei die Schalter (50a, 50b) bei geöffneter Stellung aus dem ersten und dem zweiten Rechenwerksblock vier voneinander unabhängige Recheneinheiten konfigurieren, von denen jede zwei Teilrechenwerksblöcke (1001, 1002; 1003, 1004; 1005, 1006; 1007, 1008) aufweist.

13. Rechenwerk nach einem der Ansprüche 1 oder 11 bis 12,
bei dem weitere Schalter (52a, 52b, 52c, 52d) vorhanden sind, um sämtliche Teilrechenwerksblöcke voneinander zu trennen, derart, daß das Rechenwerk in acht voneinander unabhängige Rechenwerkseinheiten bei geöffneter Stellung der weiteren Schalter (52a, 52b, 52c, 52d) konfigurierbar ist.

## Claims

1. A calculating unit comprising:
a first calculating unit block (10) comprising a first plurality of elementary cells (10a, 10b, 10c) including an LSB elementary cell (10b) for a least significant bit of a first operand and an MSB elementary cell (10c) for a most significant bit of the first operand, each elementary cell of the first calculating unit block comprising at least one register cell for storing a bit of the first operand or a result bit calculated by the elementary cell, the first calculating unit block comprising at least four partial calculating unit blocks (1001, 1002, 1003, 1004);
a second calculating unit block (12) comprising a second plurality of elementary cells (12a, 12b, 12c) including an LSB elementary cell (12b) for a least significant bit of a second operand and an MSB elementary cell (12c) for a most significant bit of the second operand, each elementary cell of the second calculating unit block (12) comprising a register cell for storing a bit of the second operand or a result bit calculated by the elementary cell, the second calculating unit block comprising at least four partial calculating unit blocks (1005, 1006, 1007, 1008),
wherein the first and second calculating unit blocks (10, 12) are arranged to each other in space such that a space distance between an elementary cell (10a) of the first calculating unit block (10) and a same significance elementary cell (12a) of the second calculating unit block is smaller than a mean distance between the elementary cell (10a) of the first calculating unit block (10) and different significance elementary cells (12b, 12c) of the second calculating unit block (12),
wherein a partial calculating unit block (1005) of the second calculating unit block is arranged between two partial calculating unit blocks (1001, 1002) of the first calculating unit block, and wherein a direction from a least significant bit to a most significant bit of the partial calculating unit block (1005) of the second calculating unit block is the same direction from a least significant elementary cell to a most significant elementary cell of a neighboring partial calculating unit block (1001) of the first calculating unit block,
wherein a direction from a least significant elementary cell to a most significant elementary cell of the partial calculating unit block (1005) of the second calculating unit block is opposite to a direction from a least significant elementary cell to a most significant elementary cell of the other neighboring partial calculating unit block (1002) of the first calculating unit, and
connecting means having a number of connecting lines (14a, 14b, 14c) equaling the number of elementary cells in a calculating unit block (10, 12), wherein a connecting line connects the at least one register cell of an elementary cell having a significance of the first calculating unit block (10) to a register cell of an elementary cell having the same significance of the second calculating unit block (12), wherein the connecting lines are arranged between the two partial calculating unit blocks (1001, 1005) having the same direction from a least significant elementary cell to a most significant elementary cell of the partial calculating unit blocks (1001, 1005); and
controlling means (16) for loading a contents of the register cells of a calculating unit block (10) via the number of connecting lines (14a, 14b, 14c) into the register cells of the other calculating unit block (12).

2. The calculating unit according to claim 1, further comprising:
a switchable carry line (18) for connecting a carry output of the MSB elementary cell (10c) of the first calculating unit block (10) to a carry input of the LSB elementary cell (12b) of the second calculating unit block; and
configuring means (20) for connecting through the switchable carry line (18) to configure the first and second calculating unit blocks (10, 12) as a single calculating means so that the first operand and the second operand can be treated as an overall operand, wherein the first calculating unit block is provided for low significance digits of the overall operand, and wherein the second calculating unit block is provided for higher significance digits of the overall operand.

3. The calculating unit according to claims 1 or 2,
wherein the first calculating unit block (10) is divided into at least two partial calculating unit blocks (101, 102) arranged in a spaced-apart way, wherein a carry output of an MSB elementary cell of the first partial calculating unit block (121) is connected to a carry input of an LSB elementary cell of the second partial calculating unit block (122),
wherein the second calculating unit block is divided into two partial calculating unit blocks (121, 122) arranged in a spaced-apart way, wherein a carry output of an MSB elementary cell of the first partial calculating unit block (121) is connected to a carry input of an LSB elementary cell (122) of the second partial calculating unit block (122),
wherein the first partial calculating unit block (101) of the first calculating unit block (10) is arranged next to the first partial calculating unit block (121) of the second calculating unit block (12), and
wherein the second partial calculating unit block (102) of the first calculating unit block (10) is arranged next to the second partial calculating unit block (122) of the second calculating unit block (12).

4. The calculating unit according to claim 3,
wherein an LSB elementary cell of the first partial calculating unit block (101) of the first calculating unit block (10) is arranged in space next to an LSB elementary cell of the first partial calculating unit block (121) of the second calculating unit block (12),
wherein an MSB elementary cell of the first partial calculating unit block (101) of the first partial calculating unit is arranged in space next to an MSB elementary cell of the first partial calculating unit block of the second calculating unit block (12),
wherein an LSB elementary cell of the second partial calculating unit block (102) of the first partial calculating unit is arranged in space next to an LSB elementary cell of the second partial calculating unit block (122) of the second calculating unit block (12), and
wherein an MSB elementary cell of the second partial calculating unit block (102) of the first calculating unit (10) is arranged in space next to an MSB elementary cell of the second partial calculating unit block (122) of the second calculating unit block (12).

5. The calculating unit according to claims 3 or 4,
wherein the number of elementary cells in each partial calculating unit block of the first and second calculating unit blocks is the same.

6. The calculating unit according to one of claims 2 to 5,
wherein each partial calculating unit block has a geometrically lateral dimension and a geometrically vertical dimension, and
wherein each partial calculating unit block is arranged essentially in parallel to other partial calculating unit blocks so that an arrangement in which a partial calculating unit block of the first calculating unit block and a partial calculating unit block of the second calculating unit block are arranged in an alternating way results.

7. The calculating unit according to one of claims 1 to 6,
wherein each elementary cell comprises at least two input operand register cells and a result register cell, and
wherein each elementary cell is formed to load a contents of the result register cell into an input operand register cell of the same elementary cell.

8. The calculating unit according to one of claims 1 to 7,
wherein each elementary cell comprises at least two input operand register cells and a result register cell,
wherein the controlling means (16) is arranged to load a contents of a result register cell of the first calculating unit block into an input operand register cell of the second calculating unit block via a connecting line (14a) associated to the elementary cell having the same significance, and
wherein the controlling means is arranged to load a contents of a result register cell of the second calculating unit block into an input operand register cell of the first calculating unit block via a connecting line (14a) associated to the elementary cells having the same significance.

9. The calculating unit according to one of claims 1 to 8, formed as a long number calculating unit.

10. The calculating unit according to claim 9, wherein the first calculating unit block has more than 160 elementary cells, and wherein the second calculating unit block also has more than 160 elementary cells.

11. The calculating unit according to claim 1,
wherein between a partial calculating unit block (1004) of the first calculating unit block and a partial calculating unit block (1005) of the second calculating unit block a configuring switch (22) is arranged, which, in an open position, configures the first and second calculating unit blocks to be calculating units independent of each other.

12. The calculating unit according to one of claims 1 or 11,
wherein further switches (50a, 50b) between respective two partial calculating unit blocks (1002, 1003; 1006, 1007) of a calculating unit block are present, wherein the switches (50a, 50b), in an open position, configure four calculating units independent of one other from the first and second calculating unit block, of which each comprises two partial calculating unit blocks (1001, 1002; 1003, 1004; 1005, 1006; 1007, 1008).

13. The calculating unit according to one of claims 1 or 11 to 12,
wherein further switches (52a, 52b, 52c, 52d) are present in order to separate all the partial calculating unit blocks from one another such that the calculating unit in an open position of the further switches (52a, 52b, 52c, 52d) is configurable into eight calculating units independent of one another.

## Revendications

1. Unité de calcul présentant les caractéristiques suivantes :
un premier bloc d'unité de calcul (10) qui comporte une première pluralité de cellules élémentaires (10a, 10b, 10c) qui comporte une cellule élémentaire LSB (10b) pour un bit de plus faible poids d'un premier opérande et une cellule élémentaire MSB (10c) pour un bit de plus fort poids du premier opérande, chaque cellule élémentaire du premier bloc d'unité de calcul comportant au moins une cellule de registre destinée à mémoriser un bit du premier opérande ou un bit de résultat calculé par la cellule élémentaire, le premier bloc d'unité de calcul comportant au moins quatre sous-blocs d'unité de calcul (1001, 1002, 1003, 1004) ;
un deuxième bloc d'unité de calcul (12) qui comporte une deuxième pluralité de cellules élémentaires (12a, 12b, 12c) qui comporte une cellule élémentaire LSB (12) destinée à un bit de plus faible poids d'un deuxième opérande et une cellule élémentaire MSB(12c) destinée à un bit de plus fort poids du deuxième opérande, chaque cellule élémentaire du deuxième bloc d'unité de calcul (12) comportant une cellule de registre destinée à mémoriser un bit du deuxième opérande ou un bit de résultat calculé par la cellule élémentaire, le deuxième bloc d'unité de calcul comportant au moins quatre sous-blocs d'unité de calcul (1005, 1006, 1007, 1008)
les premiers et deuxième blocs d'unité de calcul (10, 12) étant disposés spatialement l'un par rapport à l'autre de telle sorte qu'une distance spatiale entre une cellule élémentaire (10a) du premier bloc d'unité de calcul (10) et une cellule élémentaire équivalente (12a) du deuxième bloc d'unité de calcul est inférieure à une distance moyenne entre la cellule élémentaire (10a) du premier bloc d'unité de calcul (10) et des cellules élémentaires non équivalentes (12b, 12c) du deuxième bloc d'unité de calcul (12),
un sous-bloc d'unité de calcul (1005) du deuxième bloc d'unité de calcul étant disposé entre deux sous-blocs d'unité de calcul (1001, 1002) du premier bloc d'unité de calcul, et un sens allant d'un bit de plus faible poids vers un bit de plus fort poids du sous-bloc d'unité de calcul (1005) du deuxième bloc d'unité de calcul étant le même que le sens allant d'une cellule élémentaire de plus faible poids à une cellule élémentaire de plus fort poids d'un sous-bloc d'unité de calcul adjacent (1001) du premier bloc d'unité de calcul,
un sens allant d'une cellule élémentaire de plus faible poids à une cellule élémentaire de plus fort poids du sous-bloc d'unité de calcul (1005) du deuxième bloc d'unité de calcul étant opposé à un sens allant d'une cellule élémentaire de plus faible poids à une cellule élémentaires de plus fort poids de l'autre sous-bloc d'unité de calcul adjacent (1002) du première bloc d'unité de calcul,
un dispositif de connexion comportant un certain nombre de lignes de connexion (14a, 14b et 14c), qui est égal au nombre de cellules élémentaires dans un bloc d'unité de calcul (10, 12), une ligne de connexion reliant l'au moins une cellule de registre d'une cellule élémentaire d'un poids du premier bloc d'unité de calcul (10) à une cellule de registre d'une cellule élémentaire de même poids du deuxième bloc d'unité de calcul (12), les lignes de connexion étant placées entre les deux sous-blocs d'unité de calcul (1001, 1005) qui ont le même sens allant d'une cellule élémentaire de plus faible poids à une cellule élémentaire de plus fort poids des sous-blocs d'unité de calcul (1001, 1005) ; et
un dispositif de commande (16) destiné à charger un contenu des cellules de registre d'un bloc d'unité de calcul (10) sur le nombre de lignes de connexion (14a, 14b, 14c) dans les cellules de registre de l'autre bloc d'unité de calcul (12).

2. Unité de calcul selon la revendication 1, qui présente en outre les caractéristiques suivantes :
une ligne de report commutable (18) destiné à relier une sortie de report de la cellule élémentaire MSB (10) du premier bloc d'unité de calcul (10) à une entrée de report de la cellule élémentaire LSB (12b) du deuxième bloc d'unité de calcul ; et
un dispositif de configuration (20) destiné à commuter la ligne de report commutable (18) pour configurer les premier et deuxième blocs d'unité de calcul (10, 12) en dispositif de calcul unique de sorte que le premier opérande et le deuxième opérande peuvent être traités comme un opérande complet, le premier bloc d'unité de calcul étant destiné à des positions de poids plus faible de l'opérande complet, et le deuxième bloc d'unité de calcul étant destiné à des positions de poids plus fort de l'opérande complet.

3. Unité de calcul selon la revendication 1 ou 2, dans laquelle
le premier bloc d'unité de calcul (10) est divisé en moins deux sous-bloc d'unité de calcul (101, 102) qui sont disposés spatialement à distance, une sortie de report d'une cellule élémentaire MSB du premier sous-bloc d'unité de calcul (121) étant reliée à une entrée de report d'une cellule élémentaire LSB du deuxième sous-bloc d'unité de calcul (122),
le deuxième bloc d'unité de calcul est divisé en deux sous-blocs d'unité de calcul (121, 122) qui sont disposés spatialement à distance, une sortie de report d'une cellule élémentaire MSB du premier sous-bloc d'unité de calcul (121) étant reliée à une entrée de report d'une cellule élémentaire LSB (122) du deuxième sous-bloc d'unité de calcul (122),
le premier sous-bloc d'unité de calcul (101) du premier bloc d'unité de calcul (10) étant placé près du premier sous-bloc d'unité de calcul (121) du deuxième bloc d'unité de calcul (12), et
le deuxième sous-bloc d'unité de calcul (102) du premier bloc d'unité de calcul (10) étant placé près du deuxième sous-bloc d'unité de calcul (122) du deuxième bloc d'unité de calcul (12).

4. Unité de calcul selon la revendication 3, dans laquelle
une cellule élémentaire LSB du premier sous-bloc d'unité de calcul (101) du premier sous-bloc d'unité de calcul (10) est placée spatialement près d'une cellule élémentaire LSB du premier sous-bloc d'unité de calcul (121) du deuxième sous-bloc d'unité de calcul (12),
une cellule élémentaire MSB du premier sous-bloc d'unité de calcul (101) de la première unité de calcul est placée spatialement près d'une cellule élémentaire MSB du premier sous-bloc d'unité de calcul du deuxième bloc d'unité de calcul (12),
une cellule élémentaire LSB du deuxième sous-bloc d'unité de calcul (102) du premier bloc d'unité de calcul est placée spatialement près d'une cellule élémentaire du deuxième sous-bloc d'unité de calcul (122) du deuxième bloc d'unité de calcul (12), et
une cellule élémentaire MSB du deuxième sous-bloc d'unité de calcul (102) du premier bloc d'unité de calcul (10) est placée spatialement près d'une cellule élémentaire MSB du
deuxième sous-bloc d'unité de calcul (122) du deuxième bloc d'unité de calcul (12).

5. Unité de calcul selon la revendication 3 ou 4, dans laquelle le nombre de cellules élémentaires est le même dans chaque sous-bloc d'unité de calcul des premier et deuxième blocs d'unité de calcul.

6. Unité de calcul selon l'une des revendications 2 à 5, dans laquelle
chaque sous-bloc d'unité de calcul a une dimension géométriquement latérale et une dimension géométriquement verticale,
chaque sous-bloc d'unité de calcul est disposé sensiblement parallèlement à d'autres sous-blocs d'unité de calcul de sorte que l'on obtient un agencement dans lequel un sous-bloc d'unité de calcul du premier bloc d'unité de calcul et un sous-bloc d'unité de calcul du deuxième bloc d'unité de calcul sont disposés alternativement.

7. Unité de calcul selon l'une des revendications 1 à 6, dans laquelle
chaque cellule élémentaire comporte au moins deux cellules de registre d'opérande d'entrée et une cellule de registre de résultat,
chaque cellule élémentaire est conformée pour charger un contenu de la cellule de registre de résultats dans une cellule de registre d'opérande d'entrée de la même cellule élémentaire.

8. Unité de calcul selon l'une des revendications 1 à 7, dans laquelle
chaque cellule élémentaire comporte au moins deux cellules de registre d'opérande d'entrée et une cellule de registre de résultat,
le dispositif de commande (16) est destiné à charger un contenu d'une cellule de registre de résultat du premier bloc d'unité de calcul dans une cellule de registre d'opérande d'entrée du deuxième bloc d'unité de calcul par l'intermédiaire d'une ligne de connexion (14) associée aux cellules élémentaires de même poids, et
le dispositif de commande est destiné à charger un contenu d'une cellule de registre de résultat du deuxième bloc d'unité de calcul dans une cellule de registre d'opérande d'entrée du premier bloc d'unité de calcul par l'intermédiaire d'une liaison de connexion (14a) associée aux cellules élémentaires de même poids.

9. Unité de calcul selon l'une des revendications 1 à 8, qui est conformée en unité de calcul de nombres longs.

10. Unité de calcul selon la revendication 9, dans laquelle le premier bloc d'unité de calcul comporte plus de 160 cellules élémentaires, et dans laquelle le deuxième bloc d'unité de calcul comporte également plus de 160 cellules élémentaires.

11. Unité de calcul selon la revendication 1, dans laquelle
un commutateur de configuration (22), qui configure en position ouverte les premier et deuxième blocs d'unité de calcul en unités de calcul indépendantes l'une de l'autre, est placé entre un sous-bloc d'unité de calcul (1004) du premier bloc d'unité de calcul et un sous-bloc d'unité de calcul (1005) du deuxième bloc d'unité de calcul.

12. Unité de calcul selon l'une des revendications 1 ou 11, dans laquelle
d'autres commutateurs (50a, 50b) sont placés chacun entre deux sous-blocs d'unité de calcul (1002, 1003 ; 1006, 1007) d'un bloc d'unité de calcul, les commutateurs (50a, 50b) configurant en position ouverte les premier et deuxième blocs d'unité de calcul en quatre unités de calcul indépendantes l'une de l'autre, qui comportent chacune deux sous-blocs d'unité de calcul (1001, 1002 ; 1003, 1004 ; 1005, 1006 ; 1007, 1008),

13. Unité de calcul selon l'une des revendications 1 ou 11 à 12, dans laquelle d'autres commutateurs (52a, 52b, 52c, 52d) sont destinés à séparer tous les sous-blocs d'unité de calcul les uns des autres de sorte que l'unité de calcul peut être configurer en huit unités de calcul indépendantes l'une de l'autre lorsque les autres commutateurs (52a, 52b, 52c, 52c) sont en position ouverte.
